# EUROPÄISCHE PATENTSCHRIFT

(11) **EP 3 381 533 B1**
(45) Veröffentlichungstag und Bekanntmachung des Hinweises auf die Patenterteilung: **09.12.2020**
(21) Anmeldenummer: 18164306.5
(22) Anmeldetag: 27.03.2018
(51) Int. Cl.: B01D 24/10, B01D 24/12, B01D 24/40, B01D 24/46, B01D 21/00, B01D 21/24, B01D 21/26, E03F 5/14

(54) **SCHACHT ZUR BEHANDLUNG VON OBERFLÄCHENWASSER**
SHAFT FOR THE TREATMENT OF SURFACE WATER
PUITS DE TRAITEMENT DE L'EAU SUPERFICIELLE

(30) Priorität: 28.03.2017 DE 202017101779 U
(43) Veröffentlichungstag der Anmeldung: 03.10.2018
(73) Patentinhaber: Funke Kunststoffe GmbH, 59071 Hamm-Uentrop (DE)
(72) Erfinder: Funke, Norbert, 48324 Sendenhorst (DE); Funke, Hans-Günter, 48324 Sendenhorst (DE)
(74) Vertreter: Habbel, Ludwig

(56) Entgegenhaltungen:
- WO-A1-00/29090
- WO-A1-96/07483
- FR-A1- 2 351 687

## Beschreibung

Die Erfindung betrifft einen Schacht nach dem Oberbegriff des Anspruchs 1.

Aus der DE 20 2013 101 256 U1 ist ein gattungsgemäßer Schacht bekannt, der nicht nur zum Sammeln und Führen von Wasser dient, sondern der auch eine Behandlung des in den Schacht eingeströmten Oberflächenwassers ermöglicht. Hierzu weist der Schacht einen als Absetzraum oder Sedimentationsraum bezeichneten Raum auf. Im Absetz- oder Sedimentationsraum wird das Wasser beruhigt, so dass sich im Wasser enthaltene Partikel im Absetz- oder Sedimentationsraum absetzen können. Der Schacht könnte daher als Sedimentationsschacht bezeichnet werden.

Zusätzlich zu der Beruhigung des Wassers und der damit verbundenen Sedimentation ermöglicht der gattungsgemäße Schacht eine Reinigung des Wassers durch eine Filtration. Der Schacht könnte daher als Filterschacht bezeichnet werden.

Im Rahmen des vorliegenden Vorschlags wird der Schacht dann als Sedimentationsschacht bezeichnet, wenn die Behandlung des Wassers durch Sedimentation ohne eine zusätzliche Filtration erfolgt. Als Filterschacht wird der Schacht im Rahmen des vorliegenden Vorschlags dann bezeichnet, wenn die Behandlung des Wassers durch eine Filtration erfolgt, unabhängig davon, ob eine zusätzliche Sedimentation vorgesehen ist oder nicht. Aufgrund der unterschiedlichen Art und Weise, das in den Schacht eingeströmte Wasser zu behandeln, ist die Unterscheidung zwischen Sedimentations- und Filterschächten insofern bedeutsam, als die Wassermenge, die pro Zeiteinheit behandelt werden kann, bei einem Sedimentationsschacht erheblich größer sein kann als bei einem Filterschacht, während ein Filterschacht eine gründlichere Reinigung des Wassers ermöglicht.

In den Schacht gelangt so genanntes Rohwasser von der Bodenoberfläche, indem es beispielsweise durch eine Rinne zum Schacht geleitet wird. Bei dem Wasser kann es sich um flüssige bzw. getaute Niederschläge handeln, die von Plätzen, Straßen und Wegen, oder von Dachflächen auf die Bodenoberfläche bzw. in die Rinne und weiter in den Schacht gelangen. Das aus dem Schacht ausströmende Wasser wird nach seiner im Schacht erfolgten Behandlung als Reinwasser bezeichnet.

Aus der WO 96/07483 A1 ist eine als Filterschacht ausgestaltete Vorrichtung bekannt, die einen Schacht mit einer Öffnung als Eintrittsöffnung für ungereinigtes Rohwasser aufweist, sowie eine tangentiale Austrittsöffnung für gereinigtes Wasser. Zwischen diesen beiden Öffnungen ist ein Raum angeordnet, der eine Absätzefläche für im Rohwasser enthaltene Partikel aufweist. In dem Schacht ist oberhalb von der Eintrittsöffnung ein Trennboden angeordnet. Dieser weist eine Öffnung auf, an die sich nach oben ein Steigrohr anschließt, dessen Auslass im Abstand oberhalb des Trennbodens angeordnet ist. Eine Zwischenwand in dem Steigrohr bewirkt, dass eine in dem Raum gebildete rotierende Strömung im Steigrohr in eine linear aufsteigende Strömung übergeht. Oberhalb des Trennbodens befindet sich radial außerhalb des Steigrohrs ein Ringraum, der mit einem Filtermaterial befüllt ist. Aus dem Auslass des Steigrohrs strömendes Wasser gelangt in den Ringraum und wird gefiltert, bevor es zu der Austrittsöffnung der Vorrichtung gelangt.

Der Erfindung liegt die Aufgabe zugrunde, einen gattungsgemäßen Sedimentationsschacht dahingehend zu verbessern, dass dieser eine wirksame Beruhigung auch großer Mengen eingeströmten Rohwassers ermöglicht.

Diese Aufgabe wird durch einen Schacht mit den Merkmalen des Anspruchs 1 gelöst. Vorteilhafte Ausgestaltungen sind in den Unteransprüchen beschrieben.

Die Erfindung schlägt mit anderen Worten vor, das Wasser von unten nach oben aufsteigen zu lassen und dabei durch eine Wendel zu führen. Dabei ist vorschlagsgemäß vorgesehen, den Schacht in einen unteren und einen oberen Abschnitt mittels eines Trennbodens zu unterteilen. Der Trennboden befindet sich oberhalb von der Eintrittsöffnung, durch welche das Rohwasser in den Schacht einströmt. Im Trennboden ist eine Öffnung vorgesehen, durch die das eingeströmte Wasser in den oberen Bereich des Schachtes eintreten kann. An diese Öffnung schließt sich allerdings nach oben ein Steigrohr an, so dass das Wasser oberhalb des Trennbodens nicht unmittelbar sich über die gesamte Querschnittsfläche des Schachtes verteilen kann, sondern zunächst im Steigrohr aufsteigen muss bis zu einem Auslass, der im Abstand oberhalb des Trennbodens im Steigrohr vorgesehen ist. Innerhalb des Steigrohrs ist eine Wendel angeordnet, die um eine geschlossene Seele umläuft. Das aufsteigende Wasser wird also durch die Wendel einerseits in eine Drehbewegung gezwungen, und andererseits kann es nicht in vertikaler Richtung unmittelbar aufsteigen und durch das Steigrohr "durchschießen", sondern es gerät bei dieser nach oben gerichteten Bewegung von unten gegen die Wendel.

Eine erste Beruhigung des in den Schacht eingeströmten Wassers findet also in einem Beruhigungsraum unterhalb des Trennbodens statt, und eine zusätzliche weitere Beruhigung findet dann beim Aufstieg des Wassers innerhalb des Steigrohrs statt, so dass insgesamt eine wirksame Abscheidung von Partikeln durch die Beruhigung des Wassers bewirkt wird und so dass dementsprechend ein bereits von etlichen Partikeln gereinigtes Wasser aus dem Steigrohr austritt.

Vorschlagsgemäß ist vorgesehen, dass radial außerhalb des Steigrohrs in dem oberen Bereich des Schachtes ein zusätzlicher, als Ringraum bezeichneter Raum angeordnet ist, der das Steigrohr ringförmig umgibt. Dabei kann sich der Ringraum in Art eines geschlossenen Rings vollständig um das Steigrohr erstrecken, oder er kann in Art eines offenen Rings das Steigrohr nur teilweise umfassen, zu beispielsweise etwa 270°, so dass im verbleibenden, vom Ringraum nicht beanspruchten Raum neben dem Steigrohr gegebenenfalls noch zusätzliche Einbauten in dem Schacht untergebracht werden können. Der Ringraum dient als ein weiterer Beruhigungsraum für das Wasser und somit als eine weitere Sedimentationsstufe, in welcher eine weitere Reinigung des bereits vorgereinigten Wassers erfolgt. Der Ringraum ist fluiddurchlässig an die Austrittsöffnung des Schachtes angeschlossen, so dass nach Durchtritt durch den Ringraum das nun gereinigte Wasser aus dem Schacht ausströmen kann.

Die bei diesem Ausführungsbeispiel vorgesehenen mehreren Sedimentationsstufen bewirken eine gute Reinigungsleistung des durch den Schacht geführten Wassers, wobei die Reinigungsleistung beispielsweise anhand einer standardisierten Belastung des einströmenden Wassers mit Partikeln im Vergleich zu der Menge an Partikeln bestimmt werden kann, welche das aus dem Schacht ausströmende Wasser mit sich führt. Durch den Verzicht auf Filterstufen innerhalb des Schachtes wird der Schacht bei diesem Ausführungsbeispiel nicht als Filterschacht betrieben, sondern als reiner Sedimentationsschacht. Daher kann pro Zeiteinheit eine größere Wassermenge durch den Schacht geführt werden, so dass er im Vergleich zu einem Filterschacht eine größere hydraulische Leistung aufweist, bei erwartungsgemäß einer gegenüber einem Filterschacht geringeren Reinigungsleistung.

Ein solcher Sedimentationsschacht kann daher beispielsweise zur Entwässerung besonders großer Flächen genutzt werden, auf denen eine entsprechend große Menge an partikelbelastetem Oberflächenwasser anfällt. Oder er kann zusätzlich zu einem oder mehreren Filterschächten einer bestimmten zu entwässerten Fläche zugeordnet sein und als eine Art Überlauf dienen: wenn bei großen Niederschlagsereignissen die hydraulische Leistung des Filterschachts ausgeschöpft ist und zusätzliche Wassermengen abgeführt werden müssen, können diese in den Sedimentationsschacht geleitet werden, so dass die hydraulische Leistungsfähigkeit bei der Entwässerung der vorgegebenen Fläche erheblich gesteigert werden kann. Anders als bei einem reinen Notüberlauf bzw. Kurzschluss wird das Wasser nicht etwa unbehandelt abgegeben, sondern mittels des Sedimentationsschachts einer das Wasser von Partikeln befreienden Reinigungsbehandlung unterzogen.

Vorteilhaft kann vorgesehen sein, dass die Austrittsöffnung so weit oberhalb des Trennbodens mündet, dass unterhalb der Austrittsöffnung ein Abstand bis zum Trennboden verbleibt, wird ein besonders strömungsberuhigter Bereich zwischen dem Trennboden und der Austrittsöffnung geschaffen, in welchem sich die Sedimente ansammeln können. So kann ein Sedimentationsschacht mit hoher Reinigungsleistung geschaffen werden.

Wirtschaftlich vorteilhaft kann vorgesehen sein, die Nutzung des Schachts wahlweise als reiner Sedimentationsschacht oder als Filterschacht zu ermöglichen. Falls die Austrittsöffnung wie vorstehend erwähnt im Abstand oberhalb des Trennbodens mündet, kann die unveränderte Konstruktion des Schachts wahlweise mit oder ohne Filtermaterial verwendet werden. Das Filtermaterial kann in dem Bereich zwischen dem Trennboden und der Austrittsöffnung untergebracht werden. Zwischen dem Filtermaterial und der Austrittsöffnung ist dann vorzugsweise ein Trennsieb vorgesehen, um das Filtermaterial im Schacht zurückzuhalten und eine Strömung des gefilterten Wassers zu der Austrittsöffnung zu ermöglichen.

Durch die wahlweise mögliche Nutzung des Schachts als Sedimentationsschacht oder als Filterschacht wird nicht nur die Herstellung und die Lagerhaltung auf Seiten des Herstellers vereinfacht, sondern insbesondere auch dem Bauherrn ermöglicht, entweder kurzfristig bei der Bauplanung oder eventuell auch später, bereits während der Nutzungsphase des Schachtes, die Art der Wasserbehandlung zu ändern, ohne dass hierfür die Anschaffung und der Einbau neuer Schächte erforderlich ist.

Vorteilhaft kann vorgesehen sein, dass in dem unteren Bereich des Schachtes, also unterhalb des Trennbodens, und auch noch unterhalb von der Eintrittsöffnung, ein Trichter angeordnet ist, der sich nach unten verjüngt. Der Trichter dient dazu, innerhalb des unteren Bereichs des Schachtes Partikel, die sich in diesem Beruhigungsraum absetzen, zu sammeln.

Dabei kann vorteilhaft vorgesehen sein, dass der Trichter im Abstand oberhalb von dem Boden des Schachtes angeordnet ist und unten offen ist, so dass im Trichter angesammelte Partikel nach unten aus dem Trichter heraustreten können und in den Zwischenraum zwischen Trichter und Boden des Schachtes gelangen, der somit einen Schlammfang für diese Partikel bildet. Durch die Trichterform ist gewährleistet, dass möglichst keine dieser im Schlammfang angesammelten Partikel wieder nach oben, aus dem Schlammfang heraus, geraten können und die Reinigungswirkung des Schachtes somit nachteilig beeinflussen können.

Weiterhin kann vorteilhaft vorgesehen sein, dass die Eintrittsöffnung, die das Rohwasser in den Schacht führt, so angeordnet ist, dass sie das Rohwasser tangential in den Trichter führt. Dadurch werden Verwirbelungen vermieden und ein hoher Sedimentations- bzw. Reinigungsgrad ermöglicht, so dass die durch den Trichter angestrebte Vorreinigung des Rohwassers möglichst wirksam erfolgen kann.

Vorteilhaft kann der Schacht für eine möglichst wirksame Reinigung des Rohwassers auch bei Großniederschlagsereignissen sorgen, und zwar auch dann, wenn der Schacht als Filterschacht ausgestaltet ist. Dabei ist zu berücksichtigen, dass die pro Zeiteinheit große in den Schacht einströmende Wassermenge innerhalb einer gleichgroßen Zeiteinheit wieder aus dem Schacht herausgeführt werden muss, um eine Überlastung des Schachtes zu vermeiden. Vorteilhaft kann dies dadurch bewirkt werden, dass eine so genannte Reserve in der Filterfläche vorgesehen ist. Als Reserve wird dabei ein Abschnitt des Filters bezeichnet, der nicht ständig von Wasser durchströmt wird, so dass dementsprechend seine hydraulische Leistungsfähigkeit länger erhalten bleibt als die hauptsächlich genutzte Filterfläche, die aufgrund ihrer Filterwirkung allmählich mit den vom Filter zurückgehaltenen Partikeln beladen wird.

Die so genannte Reserve ist als Filterbereich in einem eigenen Gehäuse angeordnet, so dass das aus dem Steigrohr austretende Wasser nicht unmittelbar in dem Bereich dieser Reserve gelangen kann. Dies wird dadurch erreicht, dass die Einlassöffnung der Reserve höher liegt als die Auslassöffnung des Steigrohrs, so dass im Normalbetrieb des Schachtes das Wasser aus dem Steigrohr austritt und nicht in die Reserve einströmen kann. Erst wenn der Flüssigkeitspegel im Schacht über die Auslassöffnung des Steigrohrs hinaus ansteigt, kann Wasser in die Reserve einströmen.

Das durch die Reserve gefilterte Wasser gelangt durch eine Auslassöffnung des Gehäuses der Reserve zu der Austrittsöffnung des Schachtes, so dass durch diese Auslassöffnung des Schachtes eine hydraulische Verbindung mit dem übrigen Filterbereich außerhalb der Reserve geschaffen ist. Durch diese Verbindung zu dem übrigen Filterbereich kann allerdings nur solches Wasser im Normalbetrieb des Schachtes in die Reserve gelangen, welches bereits gefiltert ist. Hierdurch wird im normalen Filtrationsbetrieb, wenn die Reserve nicht genutzt wird, die Reserve nicht nennenswert mit Partikeln beladen.

Im normalen Betrieb des Schachtes wird daher die hydraulische Leistungsfähigkeit der Reserve nicht beeinträchtigt und somit steht diese für die erwähnten Großniederschlagsereignisse bereit, die Leistungsfähigkeit des Schachtes zu verbessern. Diese Verbesserung wird nicht nur dadurch erreicht, dass die zugeschaltete Reserve eine Vergrößerung der genutzten Filtrationsfläche bewirkt, sondern zusätzlich auch dadurch, dass die hydraulische Leistungsfähigkeit der Reserve höher ist als die eines gleich großen Abschnitts der übrigen Filterfläche.

Vorteilhaft kann in dem Steigrohr eine Wendel mit mehreren Wendelgängen angeordnet sein, so dass die durch die Wendel angestrebte Beruhigungs- und Abscheidungswirkung, bei welcher sich Partikel an den Wendelgängen anlagern, erhöht wird.

Das Schluckvermögen der Austrittsöffnung ist vorteilhaft so ausgelegt, dass sämtliches durch die Eintrittsöffnung in den Schacht gelangendes Wasser durch die Austrittsöffnung abgeführt werden kann, ohne dass es dabei zu einem Pegelanstieg innerhalb des Schachts kommt. Hierzu ist der freie durchströmbare Querschnitt der Austrittsöffnung gleich groß oder vorzugsweise größer als der freie durchströmbare Querschnitt der Eintrittsöffnung. Beispielsweise kann vorgesehen sein, dass der Durchmesser einer die Austrittsöffnung bildenden Rohrleitung wenigstens so groß oder größer ist als der Durchmesser einer Rohrleitung, welche die Eintrittsöffnung bildet.

Vorteilhaft kann der Schacht bei seinem Betrieb als reiner Sedimentationsschacht, ohne Filtermaterial, eine möglichst wirksame Reinigung des Rohwassers ermöglichen, indem auf dem Wasser aufschwimmende Leichtstoffe zurückgehalten werden. Zu diesem Zweck kann in Strömungsrichtung vor der Austrittsöffnung die Unterkante eines nach unten offenen Gehäuses tiefer angeordnet sein als die Unterkante der Austrittsöffnung. Die Unterkante des erwähnten Gehäuses bildet somit eine so genannte Tauchwand. Das Gehäuse kann beispielsweise in dem außerhalb des Steigrohrs verbleibenden Raum des Schachtes angeordnet sein, beispielsweise in einem ringförmig um ein zentral angeordnetes Steigrohr herum verbleibenden Ringraum. Wenn das Wasser einen Pegelstand oberhalb der Unterkante der Austrittsöffnung aufweist, werden die Leichtstoffe durch das Gehäuse zurückgehalten, während innerhalb des Gehäuses Wasser bis zur Austrittsöffnung aufsteigen kann und aus dem Sedimentationsschacht abfließen kann.

Wenn vorgesehen ist, wahlweise auch eine Nutzung des Schachtes als Filterschacht zu ermöglichen und den Schacht dementsprechend auszugestalten, so dass er wahlweise als Sedimentations- oder Filterschacht betrieben werden kann, kann das Gehäuse unterschiedliche Zwecke erfüllen: Bei dem Betrieb als reiner Sedimentationsschacht bildet das Gehäuse die Tauchwand und wird als Leichtstoffabscheider genutzt. Bei dem Betrieb als Filterschacht nimmt es das weiter oben erwähnte zusätzliche Filtermaterial auf und bildet die erwähnte Reserve.

Für den Betrieb als reiner Sedimentationsschacht kann es ausreichend sein, das Gehäuse nur so hoch auszugestalten, dass die Oberkante des Gehäuses knapp oberhalb der Oberkante der Austrittsöffnung liegt, so dass stets der Wasserpegel innerhalb des Sedimentationsschachts, der ja die Höhe der Oberkante der Austrittsöffnung nie überschreiten wird, auf Höhe des Gehäuses liegt. Wenn jedoch vorgesehen ist, den Schacht wahlweise auch für einen Betrieb mit Filtermaterial auszugestalten, kann das Gehäuse sich erheblich über die Oberkante der Austrittsöffnung hinaus nach oben erstrecken. Um den Schacht als Filterschacht zu nutzen, kann der Schacht vorteilhaft die nachfolgend erläuterten Merkmale aufweisen:

In dem Schacht, beispielsweise in dem erwähnten Ringraum, ist das Filtermaterial stromaufwärts von der Austrittsöffnung angeordnet, so dass es in Strömungsrichtung des Wassers der Austrittsöffnung vorgeschaltet ist und dementsprechend das Wasser das Filtermaterial passieren muss, bevor es zu der Austrittsöffnung gelangt.

Dabei kann vorteilhaft vorgesehen sein, dass das Filtermaterial an eine Vliesmatte angrenzt, welche sich wenigstens über einen Anteil der Höhe des Filtermaterials erstreckt. Die Vliesmatte ermöglicht eine Verteilung des einströmenden Wassers über diese Höhe des Filtermaterials und unterstützt so eine hohe hydraulische Leistung des Schachtes. Insbesondere kann vorteilhaft vorgesehen sein, dass sich die Vliesmatte über die gesamte Höhe des Filtermaterials erstreckt. Und insbesondere kann vorteilhaft vorgesehen sein, dass die Vliesmatte mehrlagig ausgestaltet ist, so dass unter Verwendung eines handelsüblichen Vliesmaterials eine Vliesmatte mit erheblich größerer Materialstärke geschaffen ist, welche eine hohe hydraulische Leistung aufweist, also pro Zeiteinheit von einer großen Wassermenge durchströmt werden kann.

Dass die Vliesmatte an das Filtermaterial angrenzt, ist für die gewünschte Verteilung des Wassers über einen größeren Anteil des Filtermaterials wesentlich. Beispielsweise kann die Vliesmatte in radialer Richtung mittig im Filtermaterial angeordnet sein, oder radial ganz innen, an das Steigrohr angrenzend. Besonders vorteilhaft kann die Vliesmatte zwischen dem Filtermaterial und der Wand des Schachts angeordnet sein, also radial ganz außen im Filterraum, so dass die Vliesmatte eine größtmögliche Fläche einnehmen kann und damit eine optimale hydraulische Leistung entfalten kann.

Vorteilhaft kann das Filtermaterial oberhalb der Austrittsöffnung angeordnet sein. So wird eine durch die Schwerkraft unterstützt Durchströmung des Filtermaterials sichergestellt. Zudem wird auf diese Weise ermöglicht, unterhalb des Filtermaterials einen Sammelraum für das gefilterte Wasser zu schaffen. In diesem Sammelraum kann das an den unterschiedlichsten Stellen aus dem Filtermaterial austretende, gefilterte Wasser gesammelt werden und nun ohne den durch das Filtermaterial erzeugten Strömungswiderstand zur Austrittsöffnung strömen. So wird ein schneller Abfluss des gefilterten Wassers zur Austrittsöffnung gewährleistet und die hydraulische Leistung des Schachts verbessert.

Vorteilhaft kann stromabwärts von dem Filtermaterial und stromaufwärts von der Austrittsöffnung ein Drainagerohr angeordnet ist, welches an die Austrittsöffnung anschließt. Das Dränagerohr kann somit wie der oben genannte Sammelraum wirken.

Ausführungsbeispiele der Erfindung werden anhand der rein schematischen, nicht maßstabsgerechten Darstellungen nachfolgend näher erläutert. Dabei zeigt
- Fig. 1: einen Vertikalschnitt entlang der Linie I-I von Fig. 3 durch einen als Filterschacht ausgestalteten Schacht,
- Fig.2: einen Vertikalschnitt durch denselben Filterschacht entlang der Linie II - II von Fig. 3,
- Fig. 3: einen Querschnitt durch den Filtrationsschacht der Fig. 1 und 2, und
- Fig. 4: einen Vertikalschnitt ähnlich Fig. 2 durch einen als Sedimentationsschacht ausgestalteten Schacht.

In den Zeichnungen ist jeweils mit 1 insgesamt ein Schacht bezeichnet, der eine Eintrittsöffnung 2 mit einem ersten Durchmesser für ungereinigtes Rohwasser aufweist und eine Austrittsöffnung 3 für gereinigtes Wasser. Die Austrittsöffnung 3 weist eine zweiten, größeren Durchmesser auf als die Eintrittsöffnung 2. Unterhalb der Eintrittsöffnung 2 ist ein Trichter 4 angeordnet, wobei die Eintrittsöffnung 2 als Rohrabschnitt ausgestaltet ist und das Rohwasser mittels eines Rohrbogens tangential in den Trichter 4 führt. Der Trichter 4 weist oben einen so großen Durchmesser auf, dass er sich über die gesamte Querschnittsfläche des Schachtes 1 erstreckt. Mit seinem unteren Ende ist der Trichter 4 im Abstand über einem Boden 5 des Schachtes 1 angeordnet, und da der Trichter 4 unten offen ist, können im Trichter sedimentierte Partikel durch das untere Ende des Trichters 4 in einen Raum gelangen, der als Schlammfang 6 bezeichnet ist.

Der untere Bereich des Schachtes 1 dient zu einer Vorreinigung des Rohwassers mittels der Beruhigung des Wassers und der Sedimentation von Partikeln. Dieser untere Bereich ist vom oberen Bereich des Schachtes 1 durch einen Trennboden 7 abgetrennt, der oberhalb der Eintrittsöffnung 2 verläuft. Der Trennboden 7 ist als ringförmiges Blech ausgestaltet und weist in der Mitte eine Öffnung 8 auf, durch welche Wasser über den Trennboden 7 nach oben steigen kann. An die Öffnung 8 schließt sich ein Steigrohr 9 nach oben an, wobei das Steigrohr oben offen ist, so dass es dort, im Abstand oberhalb des Trennbodens 7, seinen Auslass 10 aufweist, durch den das Wasser aus dem Steigrohr 9 herausgelangt.

Innerhalb des Steigrohrs 9 ist eine Wendel 11 mit mehreren Gängen angeordnet, so dass das Wasser, welches im Steigrohr 9 aufsteigt, durch die Wendel 11 geführt und beruhigt wird. Partikel werden durch diese Beruhigung an der Wendel 11 abgelagert, so dass im Steigrohr 9 eine zweite Vorreinigungs-Stufe geschaffen ist. Die Wendel 11 verläuft dabei um ein Innenrohr 12 und schließt fluiddicht sowohl an das Steigrohr 9 als auch an das Innenrohr 12 an, so dass das Innenrohr 12 eine geschlossene Seele für die Wendel 11 bildet.

Das vorgereinigte Wasser gelangt aus dem Steigrohr 9 in einen Ringraum 14, der außen um das Steigrohr 9 herum verläuft und welchem ein Filtermaterial 15 angeordnet ist. Außen, an die Wand des Sedimentationsschachtes 1 angrenzend, ist der Filterraum 14 durch eine mehrlagige Vliesmatte 16 begrenzt, so dass hierdurch eine Verteilung des einströmenden Wassers über die gesamte Höhe des Filtermaterials 15 begünstigt wird. Zwischen dem Filtermaterial 15 und der Austrittsöffnung 3 ist ein Trennsieb 17 angeordnet: Nach unten hin wird der Filterraum 14 durch das Trennsieb 17 begrenzt, so dass das filtrierte Wasser aus dem Filtermaterial 15 durch das Trennsieb 17 hindurch in einen Sammelraum 18 gelangt, der mit einem Granulat gefüllt ist und in welchem ein Drainagerohr 19 zur an die Austrittsöffnung 3 anschließt.

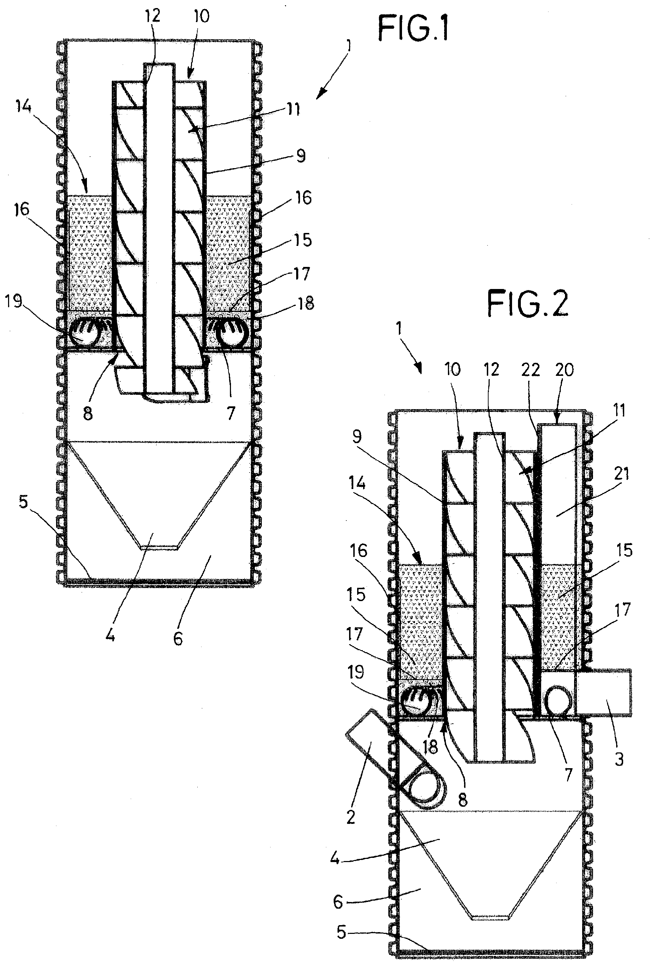

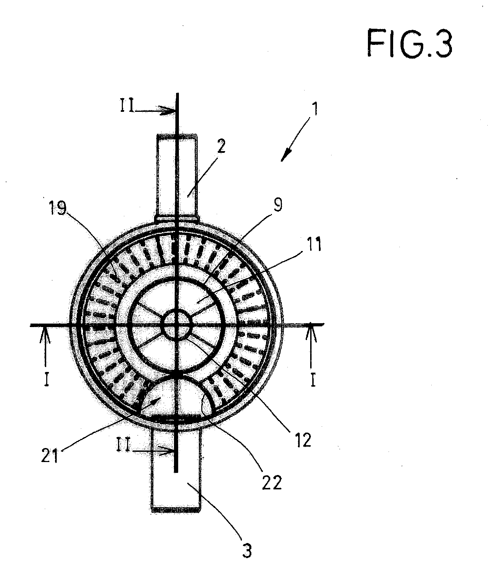

Bei dem Ausführungsbeispiel der Fig. 1 bis 3 ist der Schacht 1 als Filterschacht ausgestaltet. In dem Ringraum 14 ist ein Filtermaterial 15 angeordnet. Außen, an die Wand des Sedimentationsschachtes 1 angrenzend, ist der Filterraum 14 durch eine mehrlagige Vliesmatte 16 begrenzt, so dass hierdurch eine Verteilung des einströmenden Wassers über die gesamte Höhe des Filtermaterials 15 begünstigt wird. Nach unten hin wird der Filterraum 14 durch ein Trennsieb 17 begrenzt, so dass das filtrierte Wasser aus dem Filtermaterial 15 durch das Trennsieb 17 hindurch in einen Sammelraum 18 gelangt, der mit einem Granulat gefüllt ist und in welchem ein Drainagerohr 19 zur Austrittsöffnung 3 verläuft.

Geodätisch höher als das obere Ende des Steigrohrs 9 befindet sich eine Einlassöffnung 20 eine so genannte Reserve 21, also eines Bereichs, der vom übrigen Ringraum 14 abgetrennt ist. Die Reserve 21 weist ein eigenes Gehäuse auf, welches einerseits durch einen Umfangsabschnitt der Wand des Schachtes 1 gebildet wird und andererseits durch ein Rohrsegment 22, welches innen an die Wand des Schachtes 1 anschließt.

Bei dem Ausführungsbeispiel der Fig. 1 bis 3, bei welchem der Schacht 1 als Filterschacht ausgestaltet ist, ist die Reserve 21 ebenfalls mit dem Filtermaterial 15 gefüllt.

Das Filtermaterial 15 kann beispielsweise mineralische Filterkörper wie Sand, Kies oder dergleichen enthalten. Es kann zudem allerdings auch eine biologisch wirksame Reinigung des Wassers ermöglichen, indem das Filtermaterial 15 biologisch aktives Material wie zum Beispiel Mikroorganismen enthält. Über das Trennsieb 17, welches die Reserve 21 nach unten hin begrenzt, kann gereinigtes Wasser, welches das Filtermaterial 15 durchströmt hat und aus dem Ringraum 14 in das Drainagerohr 19 geströmt ist und sich unterhalb des Gehäuses der Reserve 21 befindet, nach oben in die Reserve 21 aufsteigen. Im Falle eines biologisch wirksamen Filtermaterials 15 sind somit stets gute Lebensbedingungen für die Mikroorganismen gewährleistet und diese beispielsweise vor dem Austrocknen geschützt.

In der Praxis ist zu beobachten, dass das Filtermaterial 15 im Laufe der Zeit eine abnehmende hydraulische Leistungsfähigkeit aufweist, da es sich aufgrund der Filtrationswirkung mit Partikeln anreichert und somit nach und nach schlechter durchströmbar wird. Bei größeren Niederschlagsereignissen kann daher die Situation auftreten, dass über den Ringraum 14 die einströmende Wassermenge nicht ausreichend schnell bis in das Drainagerohr 19 gelangen kann. In diesem Fall steigt der Wasserspiegel innerhalb des Schachtes 1 über dem Ringraum 14 an, bis er die Höhe der Einlassöffnung 20 der Reserve 21 erreicht. Anschließend strömt das Wasser auch in die Reserve 21 ein, so dass nicht nur die für die Filtration insgesamt zur Verfügung stehende Fläche vergrößert wird, sondern insbesondere auch ein Filtrationsbereich bereitgestellt wird, der aufgrund seiner selteneren Nutzung weniger mit Filtrationspartikeln beladen ist und eine dementsprechend höhere hydraulische Leistungsfähigkeit aufweist als eine vergleichbar große Menge des Filtrationsmaterials 15 im Ringraum 14.

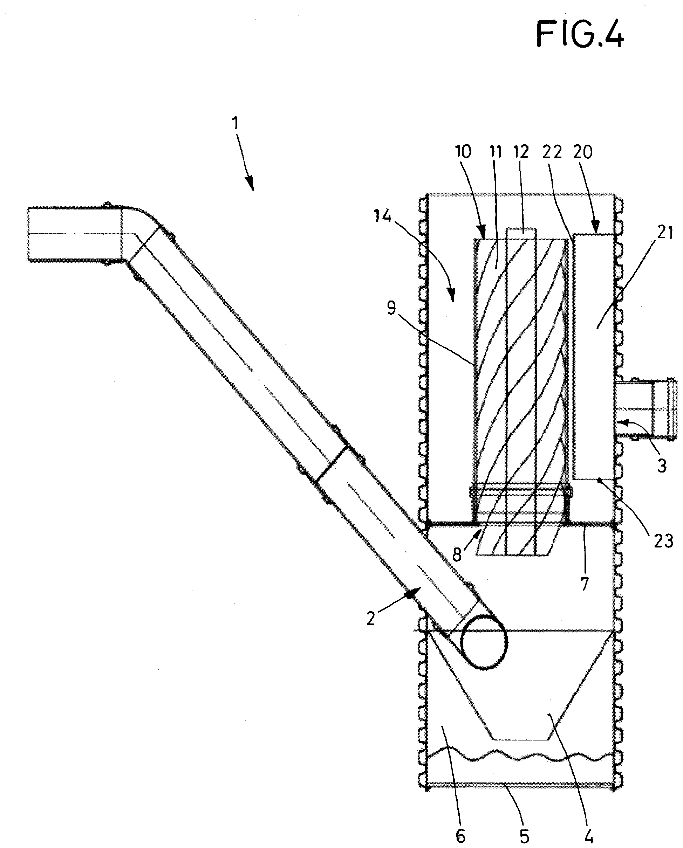

Bei dem Ausführungsbeispiel der Fig. 4 ist der Schacht 1 als Sedimentationsschacht ausgestaltet. Die Austrittsöffnung 3 mündet bei diesem Ausführungsbeispiel Fig. 4 im Abstand oberhalb von dem Trennboden 7 in den Schacht 1, insbesondere in dessen Ringraum 14. Dieser Abstand dient erstens dazu, unterhalb der Austrittsöffnung 3 einen Sedimentationsraum zu schaffen, in dem ähnlich wie im Schlammfang 6 Sedimente angesammelt werden, die sich im Ringraum 14 aus dem Wasser nach unten abgesetzt haben. Der Abstand zwischen dem Trennboden 7 und der Austrittsöffnung 3 dient in Verbindung mit der Anordnung des Rohrsegments 22 zudem zur Abscheidung von Leichtstoffen, die auf dem Wasser innerhalb des Ringraums 14 aufschwimmen, wie z.B. Öl. Eine Unterkante 23 des Rohrsegments 22 ist zu diesem Zweck tiefer als die Austrittsöffnung 3, aber im Abstand oberhalb des Trendbodens 7 angeordnet, so dass das Rohrsegment 22 eine Tauchwand bildet: Wasser kann aus dem Bereich unterhalb des Rohrsegments 22 in die Reserve 21 bis zur Austrittsöffnung 3 aufsteigen und dann den Schacht 1 verlassen, während im Schacht 1 befindliche Leichtstoffe, die auf dem Wasser aufschwimmen, vom Rohrsegment 22 zurückgehalten werden und nicht in die Austrittsöffnung 3 gelangen.

Für die Wirkung des Rohrsegments 22 als Abscheider von Leichtstoffen kann eine Höhe des Rohrsegments 22 ausreichen, die höher als bis zur Oberkante der Austrittsöffnung 3 reicht. Davon ausgehend, dass das Schluckvermögen der Austrittsöffnung 3 ausreicht, um einen Pegelanstieg des Wassers im Sedimentationsschacht 1 zu verhindern, wird auch mit einem solch kurzen Rohrsegment 22 verhindert, dass auf dem Wasser aufschwimmende Leichtstoffe in die Austrittsöffnung 3 gelangen können.

Die in der Zeichnung dargestellte Höhe des Rohrsegments 22 berücksichtigt allerdings, dass der Schacht 1 nicht nur als Sedimentationsschacht, sondern ggf. auch als Filterschacht betrieben werden kann, indem im Ringraum 14 und in der Reserve 21 Filtermaterial angeordnet wird. Die ansonsten unveränderte Konstruktion des in Fig. 4 dargestellten Sedimentationsschachts 1 kann zu diesem Zweck beispielsweise um die Komponenten des Filterschachts gemäß Fig. 1 bis 3 ergänzt werden, nämlich um die mehrlagige Vliesmatte, die 16 an der Außenwand des Schachtes 1 und innerhalb des Ringraums 14 angeordnet wird, und um ein das Filtermaterial zurückhaltendes Trennsieb 17 oberhalb der Austrittsöffnung 3.

Diese in Fig. 4 nicht dargestellten Einbauten des Sedimentationsschachts 1 können standardmäßig im Schacht 1 enthalten sein, um dem Anwender wahlweise die Nutzung des Schachtes 1 als Sedimentationsschacht oder als Filterschacht zu ermöglichen. Diese Einbauten dienen im Betrieb als reiner Sedimentationsschacht zur zusätzlichen Beruhigung der Wasserströmung und verbessern somit die Sedimentations- bzw. Reinigungsleistung des Sedimentationsschachts 1. Für die Nutzung des Schachtes 1 als Filterschacht muss dann lediglich noch das Filtermaterial 15 in den Ringraum 14 und in die Reserve 21 eingefüllt werden.

Bei dem dargestellten Ausführungsbeispielen ist vorgesehen, dass das Innenrohr 12 innerhalb der Wendel 11 für Wasser undurchlässig ist, also beispielsweise an einem oder an beiden Enden geschlossen ist. Abweichend von dem dargestellten Ausführungsbeispiel kann allerdings vorgesehen sein, dass das Innenrohr 12 einen Überlastungsschutz für den Schacht 1 für den Fall bildet, dass die hydraulische Leistungsfähigkeit des Schachts 1 beeinträchtigt ist und der Pegel innerhalb des Schachts 1 ansteigt. In diesem Fall kann vorgesehen sein, das obere Ende des Innenrohrs 12 offen zu lassen, so dass Wasser von oben in das Innenrohr 12 einströmen kann. Weiterhin ist in einem solchen Fall vorgesehen, dass das Innenrohr 12 in seinem unteren Bereich mit der Austrittsöffnung 3 kommuniziert, so dass von oben in das Innenrohr 12 geströmtes Wasser in die Austrittsöffnung 3 gelangen kann. Dabei ist wesentlich, dass unterhalb dieser Verbindung zwischen dem Innenrohr 12 und der Austrittsöffnung 3 das Innenrohr 12 geschlossen ist, so dass im Normalbetrieb des Sedimentationsschachts 1 kein Wasser von unten kurzschlussartig unter Umgehung der Wendel 11 in die Austrittsöffnung 3 gelangen kann.

Falls das Innenrohr 12 eine solche Kurzschluss- bzw. Überlastungsfunktion aufweisen soll, ist das obere Ende des Innenrohrs 12 geodätisch höher angeordnet als die Einlassöffnung 20 der Reserve 21. Auf diese Weise wird ein in drei Stufen unterschiedliches Verhalten des Schachts 1 bewirkt: Im Normalbetrieb tritt das Wasser aus der Wendel 11 des Steigrohrs 9 aus und gelangt in den Ringraum 14. Bei größeren Niederschlagsereignissen steigt der Wasserpegel innerhalb des Schachts 1 an, so dass Wasser durch die Einlassöffnung 20 auch noch zusätzlich in die Reserve 21 einströmt. Als dritte Stufe ist bei besonders großen Niederschlagsereignissen der Eintritt des Wassers oberhalb des Niveaus der Reserve 21 in das Innenrohr 12 möglich, so dass dieses Wasser dann in einem Kurzschluss unmittelbar in die Austrittsöffnung 3 geführt wird.

### Bezugszeichen:

- 1: Schacht
- 2: Eintrittsöffnung
- 3: Austrittsöffnung
- 4: Trichter
- 5: Boden
- 6: Schlammfang
- 7: Trennboden
- 8: Öffnung
- 9: Steigrohr
- 10: Auslass
- 11: Wendel
- 12: Innenrohr
- 14: Ringraum
- 15: Filtermaterial
- 16: Vliesmatte, mehrlagig
- 17: Trennsieb
- 18: Sammelraum
- 19: Drainagerohr
- 20: Einlassöffnung
- 21: Reserve
- 22: Rohrsegment
- 23: Unterkante

## Patentansprüche

1. Schacht (1),
mit einer Eintrittsöffnung (2) für ungereinigtes Rohwasser, einer Austrittsöffnung (3) für gereinigtes Wasser,
und einem zwischen der Eintrittsöffnung (2) und der Austrittsöffnung (3) angeordneten Beruhigungsraum, der eine Absetzfläche für im Rohwasser enthaltene Partikel aufweist,wobei oberhalb von der Eintrittsöffnung (2) ein Trennboden (7) in dem Schacht (1) angeordnet ist, wobei der Trennboden (7) eine Öffnung (8) aufweist, an die sich nach oben ein Steigrohr (9) anschließt, welches im Abstand oberhalb des Trennbodens (7) einen Auslass (10) aufweist,
**dadurch gekennzeichnet,**
**dass** in dem Steigrohr (9) eine Wendel (11) angeordnet ist, die um eine geschlossene Seele umläuft, derart, dass in den Schacht (1) eingeströmtes Rohwasser in dem Wendelgang über den Trennboden (7) hinaus nach oben aufsteigen kann,
wobei oberhalb des Trennbodens (7) radial außerhalb des Steigrohrs (9) ein Ringraum (14) angeordnet ist, derart, dass aus dem Auslass (10) des Steigrohrs (9) ausgeströmtes Wasser in den Ringraum (14) gelangt, und wobei der Ringraum (14) fluiddurchlässig an die Austrittsöffnung (3) des Schachts (1) anschließt, derart, dass gereinigtes Wasser aus dem Ringraum (14) zu der Austrittsöffnung (3) strömt.

2. Schacht nach Anspruch 1,
**dadurch gekennzeichnet,**
**dass** unterhalb der Eintrittsöffnung (2) ein sich nach unten verjüngender Trichter (4) angeordnet ist.

3. Schacht nach Anspruch 2,
**dadurch gekennzeichnet,**
**dass** der Trichter (4) im Abstand oberhalb von einem Boden (5) des Schachts (1) angeordnet ist und der Trichter (4) unten offen ist, derart, dass unterhalb des Trichters (4) im Schacht (1) ein Schlammfang (6) für aus dem Trichter (4) nach unten austretende Partikel geschaffen ist.

4. Schacht nach Anspruch 2,
**dadurch gekennzeichnet,**
**dass** die Eintrittsöffnung (2) das Rohwasser tangential in den Trichter (4) führend angeordnet ist.

5. Schacht nach einem der vorhergehenden Ansprüche,
**dadurch gekennzeichnet,**
**dass** der Raum radial außerhalb des Steigrohrs (9) in zwei Bereiche unterteilt ist, die jeweils von oben nach unten von aus dem Auslass (10) des Steigrohrs (9) ausgeströmtem Wasser durchströmbar sind und fluiddurchlässig an die Austrittsöffnung (3) des Schachts (1) anschließen, wobei zusätzlich zu dem Ringraum (14) ein als Reserve (21) bezeichneter Bereich in einem eigenen Gehäuse angeordnet ist, das eine Einlassöffnung (20) und eine mit der Austrittsöffnung (3) kommunizierende Auslassöffnung aufweist,
wobei die Einlassöffnung (20) der Reserve (21) geodätisch höher liegt als der Auslass (10) des Steigrohrs (9).

6. Schacht nach einem der vorhergehenden Ansprüche,
**dadurch gekennzeichnet,**
**dass** in Strömungsrichtung des Wassers der Austrittsöffnung (3) eine Wand vorgeschaltet ist,
deren Unterkante (23) geodätisch tiefer liegt als die Austrittsöffnung (3),
und die sich wenigstens genauso weit nach oben erstreckt wie die Austrittsöffnung (3).

7. Schacht nach den Ansprüchen 5 und 6,
**dadurch gekennzeichnet,**
**dass** das Gehäuse der Reserve (21) die Wand bildet, welche die Unterkante (23) aufweist.

8. Schacht nach einem der vorhergehenden Ansprüche,
**dadurch gekennzeichnet,**
**dass** in dem Steigrohr (9) eine Wendel (11) mit mehreren Wendelgängen angeordnet ist.

9. Schacht nach einem der vorhergehenden Ansprüche,
**dadurch gekennzeichnet,**
**dass** in dem Ringraum (14) ein Filtermaterial (15) angeordnet ist, welches in Strömungsrichtung des Wassers der Austrittsöffnung (3) vorgeschaltet ist.

10. Schacht nach Anspruch 9,
**dadurch gekennzeichnet,**
**dass** das Filtermaterial (15) an eine Vliesmatte (16) angrenzt, welche sich wenigstens über einen Anteil der Höhe des Filtermaterials erstreckt.

11. Schacht nach Anspruch 9 oder 10,
**dadurch gekennzeichnet,**
**dass** die Vliesmatte (16) zwischen dem Filtermaterial (15) und der Wand des Schachts (1) angeordnet ist.

12. Schacht nach einem der Ansprüche 9 bis 11,
**dadurch gekennzeichnet,**
**dass** das Filtermaterial (15) oberhalb der Austrittsöffnung (3) angeordnet ist.

13. Schacht nach Anspruch 12,
**dadurch gekennzeichnet,**
**dass** zwischen dem Filtermaterial (15) und der Austrittsöffnung (3) ein Trennsieb (17) angeordnet ist.

14. Schacht nach einem der Ansprüche 9 bis 13,
**dadurch gekennzeichnet,**
**dass** stromabwärts von dem Filtermaterial (15) und stromaufwärts von der Austrittsöffnung (3) ein Drainagerohr angeordnet ist, welches an die Austrittsöffnung (3) anschließt.

## Claims

1. Shaft (1), having an inlet hole (2) for untreated water and
an outlet hole (3) for treated water
and having a calming chamber that is disposed between the inlet hole (2) and the outlet hole (3) and incorporates a settling surface for particles contained in the untreated water, where a separating tray (7) is disposed above the inlet hole (2) in the shaft (1) and
where the separating tray (7) incorporates a hole (8) to which a rising pipe (9) that incorporates an outlet (10) a little way above the separating tray (7) connects upwards, **characterised in**
**that** a spiral element (11) that runs around a closed core is disposed in the rising pipe (9) in such a way that untreated water that has flowed into the shaft (1) can rise upwards in the spiral duct above the separating tray (7),
where an annular chamber (14) is disposed radially outside the rising pipe (9) and above the separating tray (7)
in such a way that water flowing out of the outlet (10) of the rising pipe (9) passes into the annular chamber (14),
and where the annular chamber (14) connects fluid-permeably to the outlet hole (3) of the shaft (1)
in such a way that treated water flows out of the annular chamber (14) to the outlet hole (3).

2. Shaft in accordance with claim 1, **characterised in**
**that** a downwardly tapering funnel (4) is disposed underneath the inlet hole (2).

3. Shaft in accordance with claim 2, **characterised in**
**that** the funnel (4) is disposed a little way above a floor (5) of the shaft (1) and the funnel (4) is open at the bottom
in such a way that a sludge collector (6) to catch particles dropping out of the funnel (4) is formed underneath the funnel (4) in the shaft (1).

4. Shaft in accordance with claim 2, **characterised in**
**that** the inlet hole (2) is disposed so as to guide the untreated water tangentially into the funnel (4).

5. Shaft in accordance with any one of the preceding claims, **characterised in**
**that** the chamber outside the rising pipe (9) is divided radially into two parts through each of which water flowing out of the outlet (10) in the rising pipe (9) can flow from the top downwards and each of which connects fluid-permeably to the outlet hole (3) of the shaft (1), where in addition to the annular chamber (14) a part referred to as reserve (21) is disposed in its own housing that incorporates an inlet hole (20) and a drainage hole connecting to the outlet hole (3),
where the inlet hole (20) of the reserve (21) is disposed geodetically higher than the outlet (10) of the rising pipe (9).

6. Shaft in accordance with any one of the preceding claims, **characterised in**
**that** a wall the bottom edge (23) of which is positioned geodetically lower than the outlet hole (3) and which extends upwards at least as far as the outlet hole (3) is disposed upstream of the outlet hole (3) in the direction of water flow.

7. Shaft in accordance with claims 5 and 6, **characterised in**
**that** the housing of the reserve (21) forms the wall that incorporates the bottom edge (23).

8. Shaft in accordance with any one of the preceding claims, **characterised in**
**that** a spiral element (11) having a plurality of spiral ducts is disposed in the rising pipe (9).

9. Shaft in accordance with any one of the preceding claims, **characterised in**
**that** filter material (15) that is disposed upstream of the outlet hole (3) in the direction of water flow is disposed in the annular chamber (14).

10. Shaft in accordance with claim 9, **characterised in**
**that** the filter material (15) sits against a fleece mat (16) that extends at least part way up the height of the filter material.

11. Shaft in accordance with claim 9 or claim 10, **characterised in**
**that** the fleece mat (16) is disposed between the filter material (15) and the wall of the shaft (1).

12. Shaft in accordance with any one of claims 9 to 11, **characterised in**
**that** the filter material (15) is disposed above the outlet hole (3).

13. Shaft in accordance with claim 12, **characterised in**
**that** a separating screen (17) is disposed between the filter material (15) and the outlet hole (3).

14. Shaft in accordance with any one of claims 9 to 13, **characterised in**
**that** a drainage pipe that connects to the outlet hole (3) is disposed downstream of the filter material (15) and upstream of the outlet hole (3).

## Revendications

1. Puits (1) présentant un orifice d'entrée (2) de l'eau brute non épurée,
un orifice de sortie (3) de l'eau épurée,
et un volume de stabilisation situé entre l'orifice d'entrée (2) et l'orifice de sortie (3), volume qui présente une surface de sédimentation des particules contenues dans l'eau brute, sachant qu'au-dessus de l'orifice d'entrée (2) un fond de séparation (7) est disposé dans le puits (1),
sachant que le fond de séparation (7) présente un orifice (8) auquel se raccorde une conduite montante (9) présentant un orifice d'échappement (10) situé à une certaine distance au-dessus du fond de séparation (7),
**caractérisé en ce**
**que** dans la conduite montante (9) est disposé un serpentin (11) circulant autour d'une âme fermée,
de sorte que l'eau brute qui a afflué dans le puits (1) peut monter dans le serpentin en dépassant le fond de séparation (7) sur son chemin vers le haut,
sachant qu'au-dessus du fond de séparation (7) est disposé radialement, en dehors de la conduite montante (9), un volume annulaire (14),
de sorte que le flux d'eau qui est sorti par l'orifice d'échappement (10) de la conduite montante (9) parvient dans le volume annulaire (14),
et sachant que le volume annulaire (14) se raccorde à l'orifice de sortie (3) du puits (1) de manière perméable au fluide,
de sorte que le flux d'eau épurée sort du volume annulaire (14) en direction de l'orifice de sortie (3).

2. Puits selon la revendication 1, **caractérisé en ce**
**qu'**en-dessous de l'orifice d'entrée (2) est disposé un entonnoir (4) allant en se rétrécissant en direction du bas.

3. Puits selon la revendication 2, **caractérisé en ce**
**que** l'entonnoir (4) est disposé à une certaine distance au-dessus d'un fond (5) du puits (1) et que l'entonnoir (4) est ouvert en bas,
de sorte à créer, en dessous de l'entonnoir (4), dans le puits (1), un piège à boue (6) qui retient les particules sortant de l'entonnoir (4) en direction du bas.

4. Puits selon la revendication 2, **caractérisé en ce**
**que** l'orifice d'entrée (2) est disposé pour guider l'eau brute tangentiellement dans l'entonnoir (4).

5. Puits selon l'une des revendications précédentes, **caractérisé en ce**
**que** le volume, radialement en dehors de la conduite montante (9), est divisé en deux zones pouvant chacune être traversées de haut en bas par le flux d'eau sortant par l'orifice d'échappement (10) de la conduite montante (9), et raccordées de manière perméable au fluide à l'orifice de sortie (3) du puits (1),
sachant qu'en plus du volume annulaire (14) une zone dite de réserve (21) est disposée dans son propre boîtier, lequel présente un orifice d'admission (20) et un orifice d'échappement communiquant avec l'orifice de sortie (3),
sachant que l'orifice d'admission (20) de la réserve (21) est géodésiquement situé plus haut que l'orifice d'échappement (10) de la conduite montante (9).

6. Puits selon l'une des revendications précédentes, **caractérisé en ce**
**que** dans le sens d'écoulement de l'eau une paroi est disposée en amont de l'orifice de sortie (3), paroi dont le bord inférieur (23) est situé géodésiquement plus bas que l'orifice de sortie (3), et qui s'étend vers le haut au moins aussi loin que l'orifice de sortie (3).

7. Puits selon l'une des revendications 5 et 6, **caractérisé en ce**
**que** le boîtier de la réserve (21) forme la paroi que présente le bord inférieur (23).

8. Puits selon l'une des revendications précédentes, **caractérisé en ce**
**que** dans la conduite montante (9) est disposé un serpentin (11) présentant plusieurs spires.

9. Puits selon l'une des revendications précédentes, **caractérisé en ce**
**que** dans le volume annulaire (14) est disposé un matériau filtrant (15) qui, dans le sens d'écoulement de l'eau, est situé en amont de l'orifice de sortie (3).

10. Puits selon la revendication 9, **caractérisé en ce**
**que** le matériau filtrant (15) est adjacent à un tapis en non-tissé (16), lequel tapis s'étend au moins sur une partie de la hauteur du matériau filtrant.

11. Puits selon la revendication 9 ou 10, **caractérisé en ce**
**que** le tapis en non-tissé (16) est disposé entre le matériau filtrant (15) et la paroi du puits (1).

12. Puits selon l'une des revendications 9 à 11, **caractérisé en ce**
**que** le matériau filtrant (15) est disposé au-dessus de l'orifice de sortie (3).

13. Puits selon la revendication 12, **caractérisé en ce**
**qu'**entre le matériau filtrant (15) et l'orifice de sortie (3) est disposé un tamis séparateur (17).

14. Puits selon l'une des revendications 9 à 13, **caractérisé en ce**
**qu'**une conduite de drainage est disposée en aval du matériau filtrant (15) dans le sens d'écoulement du flux et en amont de l'orifice de sortie (3) dans le sens d'écoulement du flux, conduite qui se raccorde à l'orifice de sortie (3).
